# EUROPÄISCHE PATENTSCHRIFT

(11) **EP 1 061 837 B1**
(45) Veröffentlichungstag und Bekanntmachung des Hinweises auf die Patenterteilung: **08.05.2002**
(21) Anmeldenummer: 99902490.4
(22) Anmeldetag: 15.02.1999
(51) Int. Cl.: A47F 5/08

(54) **TRAGSTANGENANORDNUNG FÜR HANDELS- UND DIENSTLEISTUNGSEINRICHTUNGEN**
SYSTEM OF SUPPORTING BARS FOR USE IN GOODS AND SERVICES ESTABLISHMENTS
SYSTEMES DE BARRES DE SUPPORT POUR ETABLISSEMENTS DE COMMERCE ET DE SERVICE

(30) Priorität: 13.03.1998 EP 98810212
(43) Veröffentlichungstag der Anmeldung: 27.12.2000
(73) Patentinhaber: Visplay IP AG, 4132 Muttenz (CH)
(72) Erfinder: WALTER, Herbert, D-79379 Müllheim (DE); UECKER, Manfred, D-79618 Rheinfelden (DE)
(74) Vertreter: Ullrich, Gerhard, Dr.
(86) Internationale Anmeldenummer: CH9900069
(87) Internationale Veröffentlichungsnummer: WO9920094

(56) Entgegenhaltungen:
- EP-A- 0 332 377
- EP-A- 0 716 825
- EP-A- 0 791 315
- WO-A-96/22469
- WO-A-97/26809
- FR-A- 1 293 293

## Beschreibung

### Anwendungsgebiet der Erfindung

Die Erfindung betrifft eine Tragstangenanordnung mit einer Trägerstange, die in eine Tragstruktur mit darin angeordneter Steckhülse arretierend einsteckbar ist. Als Tragstruktur kommen insbesondere Paneele, Rückwände und Stützen in Betracht. Typischerweise werden solche Tragstangenanordnungen in Ladengeschäften und auf Ausstellungen zur Präsentation von Waren oder Dienstleistungen verwendet. Die Tragstangenanordnungen sind aber auch zum Befestigen von Dekorations- oder Abschirmelementen sowie als Halterung für Informationsträger einsetzbar. Man kann die zu halternden Dinge, wie Bekleidungssachen, Accessoires und Warenpackungen unmittelbar an die Trägerstange anhängen oder aber die Trägerstange bildet die Konsole für den direkten Träger, z.B. eine an einer oder mehreren Trägerstangen angebrachte Warenablage. So können solche Trägerstangen beispielsweise ein- oder mehrarmige Kleiderstangen oder -bügel sein. Die Trägerstangen können Tablare stützen, Informations- oder Dekorationselemente haltern und z.B. auch Vorhänge halten.

### Stand der Technik

Besonders für Laden- und Messestandseinrichtungen ist heutzutage eine grosse Variabilität, ästhetische Gestaltung aber auch kostengünstige Lösung bei Tragstangenanordnungen wünschenswert. Eine derartige Tragstangenanordnung wird in der WO 96/18329 offenbart. Die Steckhülsen werden einzeln oder systematisch verteilt in eine Rückwand eingesetzt. Die Tragstangenanordnung besteht aus einer Steckaufnahme und einer Trägerstange, welche in die Steckaufnahme mit wenigen Handgriffen einsteckbar bzw. aus dieser ausklinkbar ist. Es ist möglich, die Steckaufnahme auf einer Präsentationswand vor- oder rückseitig aufzusetzen oder in eine Wand einzusetzen. Ebenso ist vorgesehen, die Steckaufnahme in oder auf ein Regalbauelement zu setzen. Die Trägerstange besitzt eine Steckplatte und ein daran angesetztes Rohrstück. Im angewinkelten Zustand kann die Steckplatte durch die fensterartige Einstecköffnung in das Gehäuse eingeführt und nach einer geringfügigen Verschiebung hinter Prellkanten arretiert werden. Das Rohrstück selbst dient zum Anhängen von Waren, oder es wird daran ein Warenträger gehaltert. Auch kann ein Warenträger auf den Rohrstücken mehrerer benachbarter Trägerstangen aufsitzen bzw. kann mehrere Rohrstücke mittels Querstangen verbinden. Hierzu werden systematisch verteilte Steckaufnahmen angebracht. Diese Tragstangenanordnung hat sich sehr gut gewährt. Sie ist jedoch vorrangig für quadratisch konfigurierte Steckaufnahmen konzipiert und verlangt zuvorderst an der Trägerstange eine Steckplatte. Das Konstruktionsprinzip bedingt eine gewisse Mindestgrösse der Bauteile und man benötigt durch das Verkanten der Trägerstange beim Einbzw. Ausklinken eine gewisse Bewegungsfreiheit.

Eine weitere bewährte Tragstangenanordnung wird in der WO 97/26809 vorgeschlagen. Diese Anordnung besteht ebenfalls aus einer Steckaufnahme in die mit wenigen Handgriffen eine Trägerstange einsteckbar ist. Auch der Typ von Steckaufnahmen, vornehmlich runder Gestalt, ist direkt in eine Rückwand oder in ein Paneel einsetzbar. Möglich ist auch das rückseitige Anbringen am Paneel oder Ein- bzw. Aufsetzen auf ein Regalbauelement. Die rohrstückförmige Trägerstange besitzt eine in ihrem Steckende angeordnete Rastmechanik mit einem betätigbaren Hebelelement, das eine bewegliche Rastklinke aufweist. Diese Rastklinke krallt sich im zusammengesteckten Zustand zur Arretierung in eine in der Steckaufnahme vorgesehene Eingriffskontur ein. Hier wird keine Steckplatte zuvorderst an der Trägerstange benötigt. Die Steckaufnahme hat eine relativ einfache Innenkontur und kann daher kostengünstig hergestellt werden. Allerdings erhöht die im Steckende angeordnete Rastmechanik den konstruktiven Aufwand und bedingt entsprechenden Hohlraum im Steckende, so dass die Bauteile eine gewisse Dimension aufweisen müssen.

Schliesslich wird in der EP 0 791 315 A1 eine Tragstangenanordnung beschrieben, wo ein flacher, zylindrischer, hülsenförmiger Halter in eine komplementäre Ausnehmung in einer Wand eingesetzt ist und mittels Befestigungsschrauben, die in eine rückwandseitig angeordnete Gegenplatte eingreifen, fixiert wird. An der Schaufläche besitzt der Halter einen Radialflansch, der im eingesetzten Zustand auf den zur Ausnehmung weisenden Rand der Wand aufsetzt. Am Halter ist, von der Schaufläche her, eine zentrische, kreisrunde Aussparung vorhanden, die oben durch eine Schalenöffnung vertieft ist. Auf die Schalenöffnung trifft von oben rechtwinklig eine vertikale Querfräsung, deren Fräsgrund unterhalb der Schalenöffnung liegt, so dass eine Hinterschneidung entsteht. An der zugehörigen Tragstange - diese dient zum Anhängen der Ware - befindet sich zuvorderst ein plattenförmiges, kreisrundes, angesetztes Kupplungsteil, das mit seiner Dicke und Durchmesser in die Aussparung einsetzbar ist. Oben besitzt das Kupplungsteil einen U-förmigen Aufhängehaken, der nach unten offen ist und von der Tragstange wegweist. Im eingesetzten Zustand greift der abwärts weisende Schenkel des Aufhängehakens, nach einer geringfügigen Verschiebung in Abwärtsrichtung, in den Hinterschnitt im Halter, während das übrige plattenförmige Kupplungsteil in der Aussparung zu liegen kommt. Nicht auszuschliessen ist bei dieser Anordnung, dass bei einem aufwärts gerichteten Anstossen gegen die eingehängte Tragstange, sich diese relativ leicht unbeabsichtigt aus der Arretierung löst. Überdies wird die Tragstange durch das vorn angesetzte Kupplungsteil sperriger, was bei Lagerung, Transport und Handhabung weniger günstig ist.

### Aufgabe der Erfindung

Resümierend ist festzustellen, dass die bisherige Palette der bekannten Tragstangenanordnungen - bestehend aus einer Steckaufnahme und einer Trägerstange mit einer am Steckende sitzenden Steckplatte oder einer internen Rastmechanik - noch nicht alle differenzierten Anforderungen erfüllen. Der Erfindung liegt daher das Problem zugrunde, eine andersartige Tragstangenanordnung vorzuschlagen, deren Trägerstange am Steckende weder eine Steckplatte noch eine interne Rastmechanik benötigt, sondern allein durch die Formgebung am Steckende zuverlässig in der komplementären Steckhülse zeitweilig fixiert, aber auch unproblematisch wieder entfernbar ist, so dass man mit nur wenigen Handgriffen ein Feld mit zahlreichen Steckhülsen umgestalten kann. Insbesondere wird darauf abgezielt auch kleinere Dimensionen der Bauteile zu ermöglichen.

Die zugehörige Steckhülse muss sich wiederum einfach an einer Rückwand, einem Paneel oder an einem Regalbauelement montieren lassen. Die Innenkonfiguration der Steckhülse zur Fixierung der eingesteckten Trägerstange soll eine einfache Gestalt haben und sich damit nicht kostenintensiv auswirken oder die Tragstangenanordnung störanfällig machen. Dennoch müssen die Trägerstangen sicher in den Steckaufnahmen sitzen, d.h. auch bei lebhaftem Publikumsverkehr zuverlässig arretiert sein, und ohne grossen Montageaufwand in einer Zeilenanordnung exakt ausgerichtet erscheinen. Die eingesteckten Trägerstangen müssen eine ausreichende Tragfähigkeit besitzen. Mehrere Trägerstangen sollen sich kombinieren oder mit Warenablagen, wie Tablaren bzw. offenen Kästen, versehen lassen. Wünschenswert sind vielfache Variations- und Kombinationsmöglichkeiten sowie ein den Erfordernissen im Ladenbau ansprechendes Design. Schliesslich sollen sich die Tragstangenanordnungen zu effizienten Kosten in Serie fertigen lassen.

Diese Aufgabe wird erfindungsgemäß mit den Merkmalen des Anspruchs 1 gelöst.

### Übersicht über die Erfindung

Die Tragstangenanordnung besteht aus einer von einer Tragstruktur in einem Durchbruch aufgenommenen Steckhülse und einer in diese einsteckbaren Trägerstange, welche sich auch direkt in ein Hohlprofil einstecken lässt. Die Steckhülse hat eine kapselartige Form und kann in einer Wand, in einem Paneel oder in einem Regalbauelement fixiert werden. Am Steckende der Trägerstange ist eine Hakenkontur vorgesehen, welche in der Steckhülse zum Fixieren dient.

In der Steckhülse ist ein in die Einstecköffnung hineinragendes Federelement angeordnet, welches beim Einschieben der Trägerstange in die Hakenkontur einrastet. Vorzugsweise besitzt die Steckhülse vorn einen Aufsetzflansch, während nach hinten eine Gewindepartie vorhanden ist. Die Steckhülse wird zumeist in eine Bohrung in einem Paneel eingesetzt, so dass sich der Aufsetzflansch auf der Paneelvorderseite am Rand der Bohrung abstützen kann. Auf der Paneelrückseite wird die durchragende Gewindepartie mit einer Kontermutter verschraubt. Vorteilhaft ist es, die Einstecköffnung in der Steckhülse mit einem minimen Anstieg gegenüber der Horizontalen vorzusehen, so dass die eingesteckten Trägerstangen mit leichter Neigung in den Steckhülsen stecken und auf jeden Fall der negative optische Eindruck vermieden wird, die Trägerstangen würden schief nach unten hängen.

Dank der Erfindung steht nun ein weiterer Typ von Tragstangenanordnungen zur Verfügung, wo die Trägerstange ein sehr einfach gestaltetes Steckende aufweist und dennoch zuverlässig in der Steckhülse fixiert ist, aber auch mit wenigen Handgriffen umgesteckt werden kann. Die geschaffene Rastverbindung zwischen der eingesteckten Trägerstange und der Steckhülse erlaubt die Herstellung der Bauteile in verkleinerten Dimensionen, was für bestimmte Anwendungsfälle gestalterisch von Vorteil ist. Durch die Konstruktion entfällt ein mühsames Justieren einzelner Steckaufnahmen innerhalb einer Vielzahl. Bei ordnungsgemässer Fertigung und Montage sind die eingesetzten Trägerstangen von sich aus exakt ausgerichtet und vermitteln auch daher ein solides Erscheinungsbild auf der Präsentationswand, innerhalb des Regals oder an der betreffenden Einrichtung. Die Tragstangenanordnung ist sehr variabel als unmittelbarer Warenträger und zur Halterung von Warenträgern einsetzbar.

### Kurzbeschreibung der beigefügten Zeichnungen

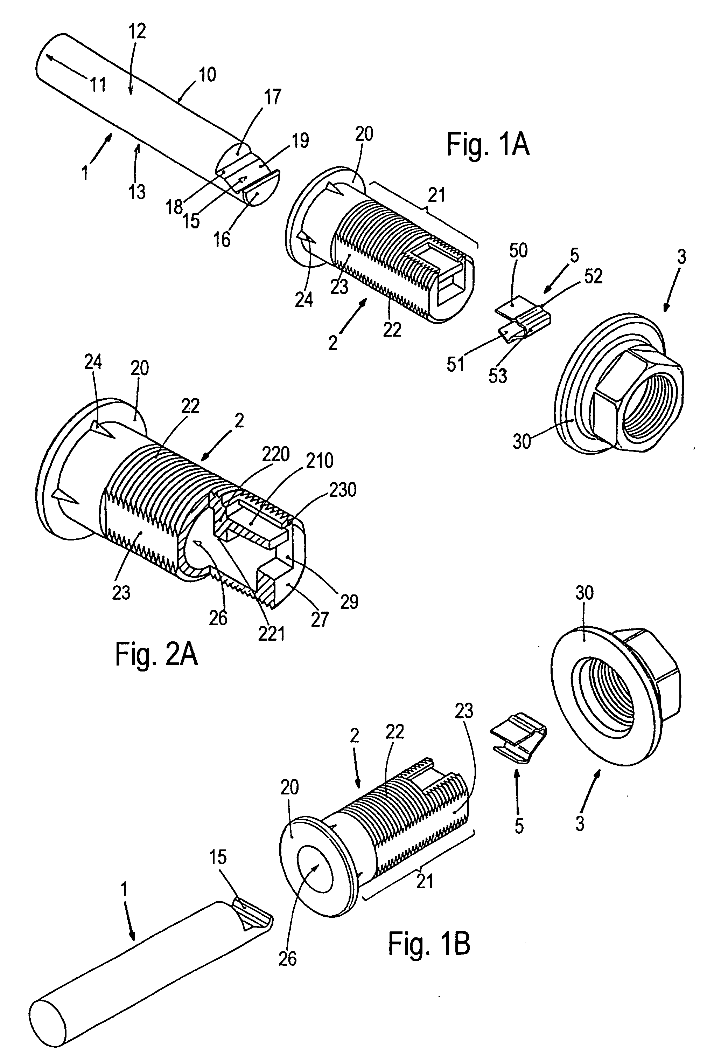

- Figur 1A:: eine Tragstangenanordnung mit dem Steckende der Trägerstange, der Steckhülse, dem Federelement und der Mutter, in Explosivdarstellung;
- Figur 1B:: die Tragstangenanordnung gemäss Figur 1A, in geänderter Perspektive;
- Figur 2A:: die Steckhülse gemäss Figur 1A, im Teilschnitt;
- Figur 2B:: die Steckhülse gemäss Figur 1A mit eingesetztem Federelement, im Teilschnitt;
- Figur 3:: die Steckhülse und die Mutter aus Figur 1A, zusammengeschraubt;
- Figur 4A:: die zusammengesteckte Tragstangenanordnung mit dem Steckende der Trägerstange, der Steckhülse und dem eingesetzten Federelement gemäss Figur 1A, im Teilschnitt;
- Figur 4B:: die Anordnung gemäss Figur 4A mit einer Anschlagschulter am Steckende der Trägerstange, im Teilschnitt;

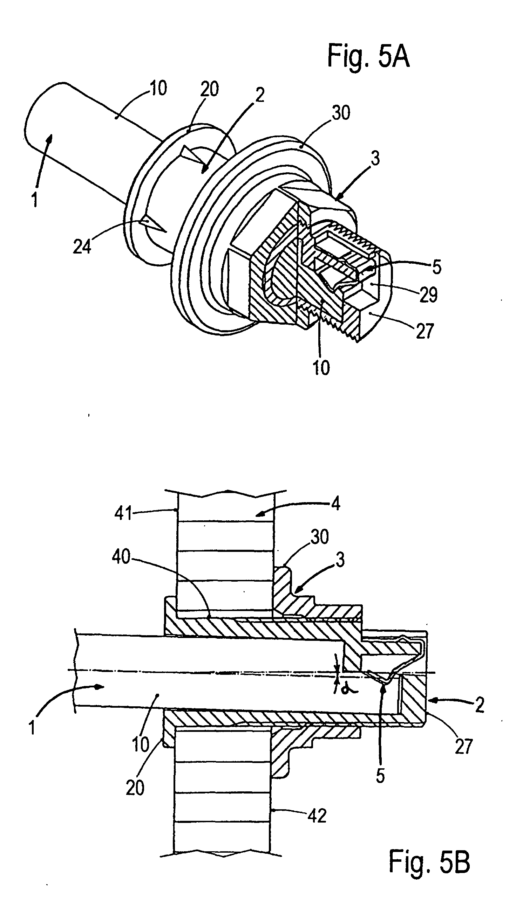

- Figur 5A:: die Anorgnung gemäss Figur 4A, mit aufgeschraubter Mutter; und
- Figur 5B:: die Tragstangenanordnung gemäss Figur 1A in einem Paneel eingesetzt, im Teilschnitt.

### Ausführungsbeispiel

Nachstehend erfolgt die detaillierte Beschreibung eines Ausführungsbeispiels der erfindungsgemässen Tragstangenanordnung. Im Anschluss an die Beschreibung werden mögliche Modifikationen erwähnt.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figuren 1A bis 3

Zur Tragstangenanordnung gehört zunächst eine Trägerstange **1,** hier aus Rundmaterial. Die Trägerstange **1** weist einerseits ein Steckende **10** und diesem gegenüber liegend ein Stangenende **11** auf. Ferner werden an der Trägerstange **1** die Stangenoberseite **12** und die Stangenunterseite **13** definiert. Das Steckende **10** ist zum Einstecken in die Steckhülse **2** bestimmt. Das Stangenende **11** kann langgestreckt, gebogen oder abgewinkelt zum unmittelbaren Anhängen von Sachen ausgebildet sein. Das Stangenende **11** kann auch eine Warenablage tragen oder im Prinzip einstückig in eine Warenablage übergehen, z.B. eine Schuhstütze.

Die Steckhülse **2** besitzt an der Vorderseite einen Aufsetzflansch **20,** hinter dem sich das Hülsenteil **21** anschliesst, welches ein Aussengewinde **22** und zwei parallele Abflachungen **23** besitzt. Am Übergang vom Aufsetzflansch **20** zum Hülsenteil **21** sind radiale Sicherungsnocken **24** vorhanden. Die Sicherungsnocken **24** dienen der Rotationssicherung der, z.B. in eine Durchgangsbohrung in einem Holzpaneel eingesetzten Steckhülse **2.** Die Abflachungen **23** ermöglichen bei der Montage einen Steckschlüssel anzusetzen, wenn die zugehörige Mutter **3** gegen die Paneelrückwand festgezogen wird. Parallel zum Aufsetzflansch **20** an der Steckhülse **2** hat die Mutter **3** einen dem Aufsetzflansch **20** zugewandten Gegenflansch **30,** der zum Aufsetzen auf die Paneelrückwand bestimmt ist. Intern der Steckhülse **2** erstreckt sich ein Sackloch **26,** welches der Aufnahme des Steckendes **10** der Trägerstange **1** dient. Zur Begrenzung der Einstecktiefe weist die Steckhülse **2** den Hülsenboden **27** auf, gegen den eine eingesteckte Trägerstange **1** anstösst.

Die Hakenkontur **15** der Trägerstange **1** ist durch Materialaussparung entstanden. Am äusseren Steckende **10** ist über einen Rastabschnitt zwischen der Stirnfläche **16** und einem vertikalen Anschlag **17,** von der Stangenoberseite **12** her, das Material etwa bis zur halben Stangendicke auf einen Sims **18** ausgespart. Nahe der Stirnfläche **16** ist von diesem Sims **18** eine V-förmige, quer verlaufende Einkerbung **19** vorgesehen, deren Grund zur Stangenunterseite **13** orientiert ist. Diese Einkerbung **19** bildet die Hakenkontur **15,** welche zur Stirnfläche **16** steiler ausgebildet ist, als zum Anschlag **17.** Der kantenförmige Übergang von der Stirnfläche **16** zur Einkerbung **19** ist abgerundet. Die so geometrisch geformte Hakenkontur **15** lässt sich spritztechnisch in Kunststoff und durch Metallbearbeitung vorteilhaft herstellen.

Ein Federelement **5** ist vorgesehen, welches an der Steckhülse **2** angebracht wird und zum Eingriff in die Hakenkontur **15** bestimmt ist. Das Federelement **5** ist eine im Prinzip U-förmig gebogene Blattfeder mit einem horizontal erstreckenden Flachteil **50** am oberen Ende und einem V-profilierten unterem Ende **51.** Das Flachteil **50** geht mit einem Querbuckel **52** in das Bogenteil **53** über.

Im oberen Bereich des Hülsenbodens **27** ist ein Durchbruch **29,** auf den axial ein Zungenteil **210** weist, welches sich aus dem Innern des Hülsenteils **21** erstreckt und dort an einen zum Hülsenboden **27** parallelen, halbkreisförmigen Innenanschlag **220** ansetzt. Der Innenanschlag **220** endet unten mit einer horizontalen Schulter **221.** Über dem Zungenteil **210** ist das Hülsenteil **21** ausgespart, wobei jedoch beidseits des Zungenteils **210** über diesem axiale, zueinander parallele Nuten **230** verbleiben. Die Nuten **230** sind zur Aufnahme der Seitenflanken des Flachteils **50** des eingeschobenen Federelements **5** vorgesehen, wobei der Querbuckel **52** eine Verklemmung in den Nuten **230** bewirkt. Das Bogenteil **53** des Federelements **5** windet sich um das Zungenteil **210,** so dass das untere V-profilierte Ende **51** des Federelements **5** durch den Durchbruch **29** in das Sackloch **26** hineinragt.

### Figuren 4A und 4B

Ist die Trägerstange **1** mit dem Steckende **10** in das Sackloch **26** der Steckhülse **2** maximal eingeschoben, so stossen die Stirnfläche **16** und/oder der Anschlag **17** gegen die Innenseite des Hülsenbodens **27** bzw. gegen den Innenanschlag **220** in der Steckhülse **2.** Beim Einführen des Steckendes **10** schiebt sich die Hakenkontur **15** am unteren V-förmig profilierten Ende **51** des Federelements **5** vorbei, bis dieses in die tiefer liegende Einkerbung **19** einrastet. Damit ist die Trägerstange **1** in der Steckhülse **2** gegen unbeabsichtigtes Herausziehen und gegen Verdrehen gesichert. Will man die Trägerstange **1** wieder entfernen, muss mit solcher Kraft an der Trägerstange **1** gezogen werden, dass die Spannung des Federelements **5** überwunden wird, d.h. sich dessen Ende **51** hochbiegt und die Hakenkontur **15** überspringt. Die Verdrehsicherung der in die Steckhülse **2** eingesteckten Trägerstange **1** ist durch den horizontalen, quer verlaufenden Sims **18** und die Schulter **221** gewährleistet, die miteinander zur Anlage kommen.

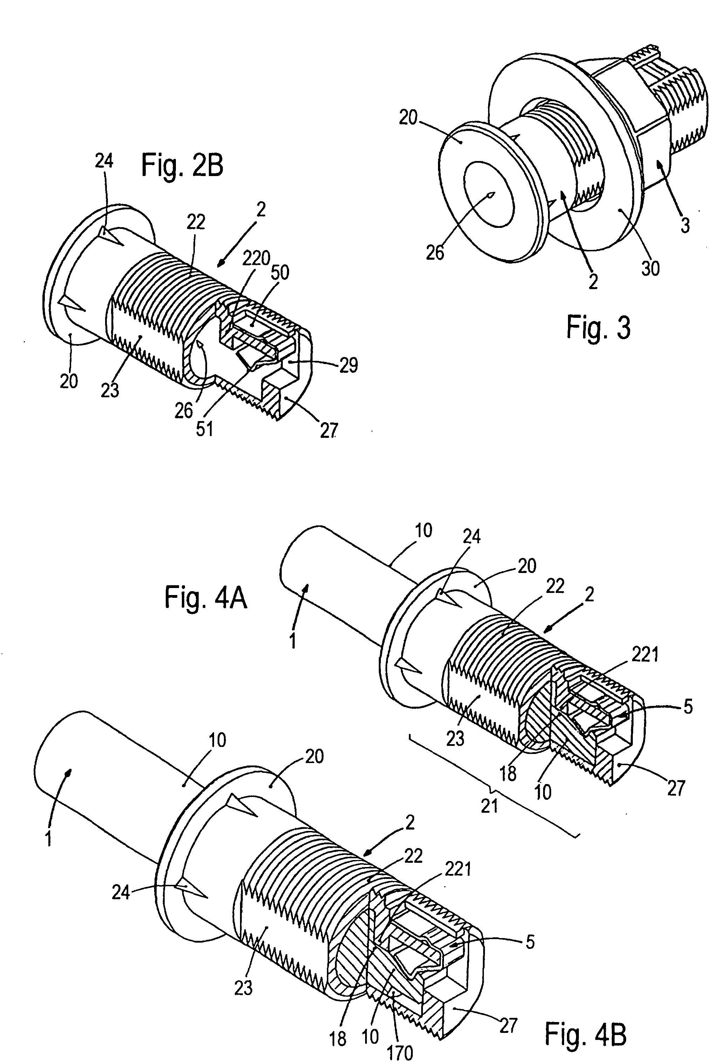

Die Ausführung gemäss Figur 4B unterscheidet sich lediglich dadurch, dass das Steckende **10** zusätzlich mit einer Anschlagschulter **170** versehen ist. Im Zusammenwirken mit einer Steckhulse **2** hat die Anschlagschulter **170** keine Funktion. Jedoch ist die Anschlagschulter **170** zur Begrenzung der Einstecktiefe beim direkten Einstecken der Trägerstange **1** in komplementäre Öffnungen eines Hohlprofils - z.B. ein Rohr - von Vorteil. Da Trägerstangen **1** mit Anschlagschulter **170** sowohl für das Einstecken in Steckhülsen **2** als auch in entsprechend gestaltete Hohlprofile verwendet werden können, ist es sinnvoll, an den Trägerstangen **1** generell eine Anschlagschulter **170** vorzusehen.

### Figuren 5A und 5B

Zum Einsetzen einer Steckhülse **2** in ein Paneel **4** muss zuvor ein Durchbruch **40** im Paneel **4** erzeugt werden. Die in den Durchbruch **40** eingesetzte Steckhülse **2** sitzt mit ihrem Aufsetzflansch **20** an der Frontseite **41** des Paneels **4** auf. Von der Paneelrückseite **42** wird die Mutter **3** auf das Aussengewinde **22** am Hülsenteil **21** aufgeschraubt, welches den Durchbruch **40** durchragt, so dass der Gegenflansch **30** auf der Paneelrückseite **42** aufliegt. Damit ist die in den Durchbruch **40** eingesetzte Steckhülse **2** fixiert. Um der eingesteckten Trägerstange **1** eine optisch vorteilhafte Ausrichtung zu geben, besitzt das axiale Sackloch **26** in der Steckhülse **2** vom Hülsenboden **27** hin zum Aufsetzflansch **20** einen leichten Anstieg im Winkel α > 0°.

Ausdrücklich erwähnt seien noch folgende Abwandlungsmöglichkeiten der bisher beschriebenen Tragstangenanordnung:
- Gestalterisch effektvoll lassen sich die Steckhülsen **2** auf einem Paneel **4** über ein Feld verteilen, die dann unterschiedlich bestückt werden können, wobei auch Trägerstangen **1** einsetzbar sind, die zwei und mehrere Steckhülsen **2** überbrücken und dort mit ihren Steckenden **10** einzusetzen sind.
- Die Trägerstange **1** kann aus Metall oder Kunststoff gefertigt sein, je nach gewünschter Optik und Belastungswerten. Die Steckhülse **2** wird man vorzugsweise als metallisches Gussteil herstellen.
- Die Trägerstange **1** muss nicht aus Rundmaterial sein, auch kantiges Stangenmaterial ist einsetzbar. Als Tragstruktur, in welche die Steckhülse **2** einsetzbar ist, kommen auch Regalbauelemente, Rohrkonstruktionen oder Rahmenteile in Betracht.
- Anstatt die Steckhülse **2** zu verschrauben, könnte diese in den vorbereiten Durchbruch **40** mit der vorgesehenen Einsetztiefe auch eingeklebt werden.
- Beim Einsetzen der Steckhülsen **2** in Glaswände ist es ratsam, den Aufsetzflansch **20** und den Gegenflansch **30** zu vergrössern.

## Patentansprüche

1. Tragstangenanordnung für Handels- und Dienstleistungseinrichtungen zum direkten oder indirekten Anhängen von zu präsentierenden Dingen bestehend aus:
a) einer Trägerstange (**1**), die zuvorderst ein Steckende (**10**) mit einer Hakenkontur (**15**) besitzt; und
b) einer Steckhülse (**2**), die eine axiale Eintrittsöffnung (**26**) aufweist und in einen Durchbruch (**40**) in einer Tragstruktur (**4**) fixiert einsetzbar ist; wobei
c) das Steckende (**10**) der Trägerstange (**1**) mit der Hakenkontur (**15**) in die Eintrittsöffnung (**26**) arretierend einsteckbar ist, **dadurch gekennzeichnet, dass**
d) die Arretierung der eingesteckten Trägerstange (**1**) durch Einrasten eines in der Steckhülse (**2**) angeordneten Federelements (**5**) in die Hakenkontur (**15**) bewirkt wird.

2. Tragstangenanordnung nach Anspruch 1, **dadurch gekennzeichnet, dass** die am Steckende (**10**) vorhandene Hakenkontur (**15**) wie folgt beschaffen ist:
a) am äusseren Steckende (**10**) ist beginnend an der Stirnfläche (**16**) über einen Längenabschnitt, von der Stangenoberseite (**12**) her, Material etwa bis zur halben Stangendicke, bis auf das Niveau eines Simses (**18**) ausgespart;
b) nahe der Stirnfläche (**16**) ist von diesem Sims (**18**) aus eine V-förmige, quer verlaufende Einkerbung (**19**) vorgesehen, deren Grund zur Stangenunterseite (**13**) orientiert ist; und
c) der kantenförmige Übergang von der Stirnfläche (**16**) zur Einkerbung (**19**) abgerundet ist.

3. Tragstangenanordnung nach Anspruch 2, **dadurch gekennzeichnet, dass** die Einkerbung (**19**) die Hakenkontur (**15**) bildet, welche zur Stirnfläche (**16**) steiler ausgebildet ist als in Gegenrichtung, wo die Materialaussparung in einer Anschlagfläche (**17**) endet.

4. Tragstangenanordnung nach Anspruch 1, **dadurch gekennzeichnet, dass** das Federelement (**5**) die Gestalt einer Blattfeder hat und am hinteren Ende in die Steckhülse (**2**) eingesetzt ist, wobei
a) ein Federteil (**51**) in die Eintrittsöffnung (**26**) hineinragt, welches dazu bestimmt ist, in die Hakenkontur (**15**) einer eingesteckten Trägerstange (**1**) einzurasten; und
b) das Federteil (**51**) zumindest nahezu ebenso breit ist wie die Hakenkontur (**15**).

5. Tragstangenanordnung nach Anspruch 1 oder 4, **dadurch gekennzeichnet, dass**
a) die Steckhülse (**2**) hinten mit einem Hülsenboden (**27**) abschliesst, in dem im oberen Bereich ein Durchbruch (**29**) vorhanden ist;
b) auf den Durchbruch (**29**) ein aus dem Inneren der Steckhülse (**2**) kommendes Zungenteil (**210**) gerichtet ist;
c) das Zungenteil (**210**) in einen halbkreisförmigen Innenanschlag (**220**) übergeht, der unten mit einer horizontalen Schulter (**221**) endet;
d) die Schulter (**221**) im zusammengesteckten Zustand mit dem darunter befindenden Sims (**18**) zur Anlage kommt, wodurch die Verdrehsicherung der Trägerstange (**1**) gewährleistet ist; und
e) das Federelement (**5**) auf dem Zungenteil (**210**) aufgesteckt ist und sich zusätzlich in seitlichen Nuten (**230**) im Hülsenteil (**21**) der Steckhülse (**2**) abstützen kann.

6. Tragstangenanordnung nach Anspruch 1, **dadurch gekennzeichnet, dass**
a) die Steckhülse (**2**) vorn einen die Eintrittsöffnung (**26**) umgebenden Aufsetzflansch (**20**) besitzt, an den sich ein Hülsenteil (**21**) anschliesst, welches mit Aussengewinde (**22**) und zwei zueinander parallelen, abgeflachten Schlüsselflächen (**23**) versehen ist; und
b) auf das Aussengewinde (**22**) eine Mutter (**3**) aufschraubbar ist, um die in den in der Tragstruktur (**4**) vorhandenen Durchbruch (**40**) eingesetzte Steckhülse (**2**) zu fixieren.

7. Tragstangenanordnung nach Anspruch 1, **dadurch gekennzeichnet, dass** die Eintrittsöffnung (**26**) im Verhältnis zur horizontalen Achse, nach vorn hin, aufsteigend unter dem Winkel (α) > 0° verläuft.

8. Tragstangenanordnung nach Anspruch 6, **dadurch gekennzeichnet, dass**
a) hinter dem Aufsetzflansch (**20**) erhabene Sicherungsnocken (**24**) vorhanden sind, die sich auf das Hülsenteil (**21**) zu erstrecken; und
b) an der Mutter (**3**) ein dem Aufsetzflansch (**20**) zugewandter Gegenflansch (**30**) vorhanden ist.

## Claims

1. A supporting-bar arrangement for goods and services establishments for hanging, directly or indirectly, articles which are to be displayed, consisting of:
a) a support bar (**1**) which has, at the front, a plug-in end (**10**) with a hook contour (**15**); and
b) a plug-in sleeve (**2**) which is provided with an axial inlet opening (**26**) and which can be inserted fastened into a through-passage (**40**) of a supporting structure (**4**); wherein
c) the plug-in end (**10**) of the support bar (**1**) with the hook contour (**15**) can be plugged with arresting action into the inlet opening (**26**), **characterized in that**
d) the plugged-in support bar (**1**) is arrested by latching into the hook contour (**15**) a spring element (**5**) arranged in the plug-in sleeve (**2**).

2. The support-bar arrangement as claimed in claim 1, **characterized in that** the hook contour (**15**), which is provided at the plug-in end (**10**), is as follows:
a) at the outer plug-in end (**10**), beginning at the end surface (**16**), over a certain length section, from the top side (**12**) of the bar, material is recessed approximately to half the bar thickness, to the level of a ledge (**18**);
b) provided in the vicinity of the end surface (**16**), from said ledge (**18**), is a V-shaped, transversely running indent (**19**), of which the base is oriented toward the underside (**13**) of the bar; and
c) the edge-like transition from the end surface (**16**) to the indent (**19**) is rounded.

3. The supporting-bar arrangement as claimed in claim 2, **characterized in that** the indent (**19**) forms the hook contour (**15**), which is designed to be steeper toward the end surface (**16**) than in the opposite direction, where the material recess terminates in a stop surface (**17**).

4. The supporting-bar arrangement as claimed in claim 1, **characterized in that** the spring element (**5**) is in the form of a leaf spring and is inserted into the plug-in sleeve (**2**) at the rear end, wherein
a) a spring part (**51**) projects into the inlet opening (**26**) and is intended for latching into the hook contour (**15**) of a plugged-in support bar (**1**); and
b) the spring part (**51**) is at least virtually as wide as the hook contour (**15**).

5. The supporting-bar arrangement as claimed in claim 1 or 4, **characterized in that**
a) the plug-in sleeve (**2**) closes off at the rear with a sleeve base (**27**), in which a through-passage (**29**) is provided in the top region;
b) a tongue part (**210**) coming from the interior of the plug-in sleeve (**2**) is directed onto the through-passage (**29**);
c) the tongue part (**210**) merges into a semicircular inner stop (**220**) which terminates at the bottom with a horizontal shoulder (**221**);
d) in the plugged-together state, the shoulder (**221**) comes into abutment against the ledge (**18**) located therebeneath, this ensuring that the support bar (**1**) is secured against rotation; and
e) the spring element (**5**) is plugged on the tongue part (**210**) and can be supported additionally in lateral grooves (**230**) in the sleeve part (**21**) of the plug-in sleeve (**2**).

6. The supporting-bar arrangement as claimed in claim 1, **characterized in that**
a) the plug-in sleeve (**2**) has, at the front, a positioning flange (**20**) which encloses the inlet opening (**26**) and is adjoined by a sleeve part (**21**) which is provided with an external thread (**22**) and two mutually parallel, flattened wrench-attachment surfaces (**23**); and
b) a nut (**3**) can be screwed onto the external thread (**22**) in order to fix the plug-in sleeve (**2**) inserted into the wall through-passage (**40**).

7. The supporting-bar arrangement as claimed in claim 1, **characterized in that** the inlet opening (**26**) slopes upwards at the angle (α) > 0°, in a forward direction, in relation to the horizontal axis.

8. The supporting-bar arrangement as claimed in claim 6, **characterized in that**
a) provided behind the positioning flange (**20**) are elevated securing protrusions (**24**) which extend toward the sleeve part (**21**); and
b) a counterflange (**30**) which is directed toward the positioning flange (**20**) is provided on the nut (**3**).

## Revendications

1. Agencement de tringle de support pour des équipements de commerce et de service, pour la suspension directe ou indirecte d'objets à présenter, se composant de:
a) une tringle porteuse (**1**), qui comporte tout à l'avant une extrémité d'insertion (**10**) avec un contour en crochet (**15**); et
b) une douille d'insertion (**2**), qui présente une ouverture d'entrée axiale (**26**) et qui peut être introduite et fixée dans un passage (**40**) dans une structure portante (**4**); dans lequel
c) l'extrémité d'insertion (**10**) de la tringle porteuse (**1**) peut être insérée et bloquée avec le contour en crochet (**15**) dans l'ouverture d'entrée (**26**), **caractérisé en ce que**
d) le blocage de la tringle porteuse insérée (**1**) est assuré par accrochage d'un élément élastique (**5**) disposé dans la douille d'insertion (**2**) dans le contour en crochet (**15**).

2. Agencement de tringle de support suivant la revendication 1, **caractérisé en ce que** le contour en crochet (**15**) prévu sur l'extrémité d'insertion (**10**) est réalisé de la façon suivante:
a) sur l'extrémité d'insertion extérieure (**10**), on évide la matière sensiblement jusqu'à la moitié de l'épaisseur de la tringle, jusqu'au niveau d'un entablement (**18**) à partir du côté supérieur (**12**) de la tringle, en commençant à la face frontale (**16**) et sur une portion de la longueur;
b) à proximité de la face frontale (**16**), il est prévu à partir de cet entablement (**18**) une entaille transversale en forme de V (**19**), dont le fond est orienté vers le côté inférieur (**13**) de la tringle; et
c) l'arête de jonction de la face frontale (**16**) avec l'entaille (**19**) est arrondie.

3. Agencement de tringle de support suivant la revendication 2, **caractérisé en ce que** l'entaille (**19**) forme le contour en crochet (**15**), qui est plus abrupt vers la face frontale (**16**) que dans le sens opposé, où l'évidement de matière se termine par une face de butée (**17**).

4. Agencement de tringle de support suivant la revendication 1, **caractérisé en ce que** l'élément élastique (**5**) a la forme d'une lame de ressort et est introduit dans la douille d'insertion (**2**) à l'extrémité arrière, dans lequel
a) une partie élastique (**51**) pénètre dans l'ouverture d'entrée (**26**), et est destinée à s'accrocher dans le contour en crochet (**15**) d'une tringle porteuse insérée (**1**); et
b) la partie élastique (**51**) est au moins à peu près aussi large que le contour en crochet (**15**).

5. Agencement de tringle de support suivant la revendication 1 ou 4, **caractérisé en ce que**
a) la douille d'insertion (**2**) se termine à l'arrière par un fond de douille (**27**), dans lequel un passage (**29**) est prévu dans sa région supérieure;
b) une partie de languette (**210**) venant de l'intérieur de la douille d'insertion (**2**) est dirigée vers le passage (**29**);
c) la partie de languette (**210**) devient une butée intérieure semi-circulaire (**220**), qui se termine en bas par un épaulement horizontal (**221**);
d) en position insérée, l'épaulement (**221**) vient buter sur l'entablement (**18**) se trouvant sous celui-ci, ce qui garantit un blocage de la rotation de la tringle porteuse (**1**); et
e) l'élément élastique (**5**) est chaussé sur la partie de languette (**210**) et peut en outre prendre appui dans des rainures latérales (**230**) dans la partie de douille (**21**) de la douille d'insertion (**2**).

6. Agencement de tringle de support suivant la revendication 1, **caractérisé en ce que**
a) la douille d'insertion (**2**) présente à l'avant une bride d'appui (**20**) entourant l'ouverture d'entrée (**26**), à laquelle se raccorde une partie de douille (**21**), qui est pourvue d'un filet extérieur (**22**) et de deux faces d'application de clé (**23**), aplaties et parallèles l'une à l'autre; et
b) un écrou (**3**) peut être vissé sur le filet extérieur (**22**), afin de fixer la douille d'insertion (**2**) introduite dans le passage (**40**) existant dans la structure portante (**4**).

7. Agencement de tringle de support suivant la revendication 1, **caractérisé en ce que** l'ouverture d'entrée (**26**) est inclinée d'un angle (α) > 0° par rapport à l'axe horizontal, avec une pente ascendante vers l'avant.

8. Agencement de tringle de support suivant la revendication 6, **caractérisé en ce que**
a) des ergots d'immobilisation en saillie (**24**) sont prévus derrière la bride d'appui (**20**), et s'étendent vers la partie de douille (**21**); et
b) il y a sur l'écrou (**3**) une contre-bride (**30**) tournée vers la bride d'appui (**20**).
